# EUROPEAN PATENT APPLICATION

(11) **EP 3 023 152 A1**
(43) Date of publication of application: **25.05.2016**
(21) Application number: 14194083.3
(22) Date of filing: 20.11.2014
(51) Int. Cl.: B01L 3/02

(54) **Method for producing a liquid sample for analysis by use of radiation**

(71) Applicant: Friedrich-Alexander-Universität Erlangen-Nürnberg, 91054 Erlangen (DE)
(72) Inventor: Schiener, Andreas, 96049 Bamberg (DE); Magerl, Andreas, Prof.Dr., 91077 Neunkirchen am Brand (DE)
(74) Representative: Ehnis, Tobias

(57) **Abstract**

The invention concerns a method for producing a liquid sample for analysis by use of radiation (18), wherein the sample is produced in stopped-flow technique, wherein at least two solutions are forced into an area (10), wherein the area (10) is orientated and shaped such that a drop (17) hanging at the area (10) can be formed, wherein flow of the solutions into the area (10) is stopped when the drop (17) has formed and is hanging at the area (10).

## Description

The invention concerns a method for producing a liquid sample for analysis by use of radiation, wherein the sample is produced in stopped-flow technique, wherein at least two solutions are forced into an area.

In this known technique the flow of the solutions is stopped after a very short period of flow, e. g. after a few milliseconds. Usually the area is a mixing chamber that can be used as observation cell. After the mixing chamber is filled the sample in the mixing chamber is measured by use of radiation. The stopped-flow technique allows studying fast reactions that have half-lives as short as a few milliseconds. A device for performing such a technique and analysis is a rapid mixing device in which two or more solutions can be mixed and analyzed. Such a device is provided, e. g. by Bio-Logic SA, France.

The inventors of the present invention recognized that in known devices results of measurements using visible light, UV-radiation, IR-radiation or X-radiation, e. g. in diffraction experiments for structural analysis, cannot be used for analyzing specific chemical reactions. Furthermore, they recognized that a reason for this is the influence of the change of the surface of the walls of the mixing chamber by coating of these walls. If the kinetics of this coating is not known the results of such an experiment cannot be interpreted reliably. The results comprise significant errors. Furthermore, the reaction chamber by itself can influence the reaction and the results of the measurement. This is known for example from Wang, Z. L., Kong, X. Y., Ding, Y., Gao, P., Hughes, W. L., Yang, R., & Zhang, Y. (2004), Semiconducting and Piezoelectric Oxide Nanostructures Induced by Polar Surfaces, Advanced Functional Materials, 14(10), 943-956, doi:10.1002/adfm.200400180.

The problem to be solved by the present invention is to provide a method for producing a liquid sample by use of stopped-flow technique which liquid sample is for analysis and which method drastically reduces or totally prevents the influence of surfaces and the coating of these surfaces. Furthermore, a device for performing such a method shall be provided.

The problems of the present invention are solved by the features of claims 1 and 15. Embodiments of the method according to the invention are subject-matter of claims 2 to 14.

According to the invention a method for producing a liquid sample for analysis by use of radiation, wherein the sample is produced in stopped-flow technique, wherein at least two solutions are forced into an area is provided. The area is orientated and shaped such that a drop hanging at the area can be formed from the at least two solutions, wherein flow of the solutions into the area is stopped when the drop has formed and is hanging at the area. By this method the surface area contacting the mixed solutions and the influence of the surface is drastically reduced. The solutions may be brought together and mixed in the area or a micro mixer connected to the area. For the mixing of two solutions the micro mixer may have a Y-shaped structure such that the two solutions can flow together and thereby be mixed. Once the volume of one drop is mixed, the injection is stopped. A stable drop is adhering to the area due to adhesion forces. The sample in the hanging drop can be analyzed by use of radiation, wherein the radiation passes through the drop by entering and leaving the drop at a first and a second gas-liquid interface, respectively. Radiation comprises any electromagnetic wave and any particle radiation.

In one embodiment of the invention the drop is blown away by use of a gas stream after the analysis was performed and a new drop is formed according to the method of the invention for producing a further liquid sample for analysis by use of radiation. Depending on the mixing kinetics this process comprising the forming of the drop, analysis of the sample by use of radiation, and blowing away the drop can be repeated quickly, e. g. at a frequency of up to 10 Hz.

The invention further relates to a device for performing the method according to the invention comprising at least two reservoirs for storing different solutions in each of the reservoirs, an area, one line per reservoir which line connects the reservoir with the area or with a micro mixer connected with the area via a further line such that the solution contained in this reservoir can be forced into the area via this line or via this line, the micro mixer and the further line, a pump or valve per line which pump or valve can be controlled such that a flow of the solution from said line into the area or the micro mixer can be generated and stopped when a drop has formed at the area, wherein the area is orientated and shaped such that a drop hanging at the area can be formed. The valve is sufficient to control the flow of the solution if this flow is driven by gravity.

The device can comprise a source of radiation which source can generate a ray which can pass through the drop by entering and leaving the drop at a first and a second gas-liquid interface, respectively. The device can also comprise a screen or a detector to collect the resulting scattered radiation.

In the following an embodiment of the invention is described by use of figures.
Fig. 1 schematically shows an area that can be used for performing a method according to the invention.
Fig. 2 schematically shows the use of a device according to the invention, wherein the source of radiation as well as a pump are omitted.

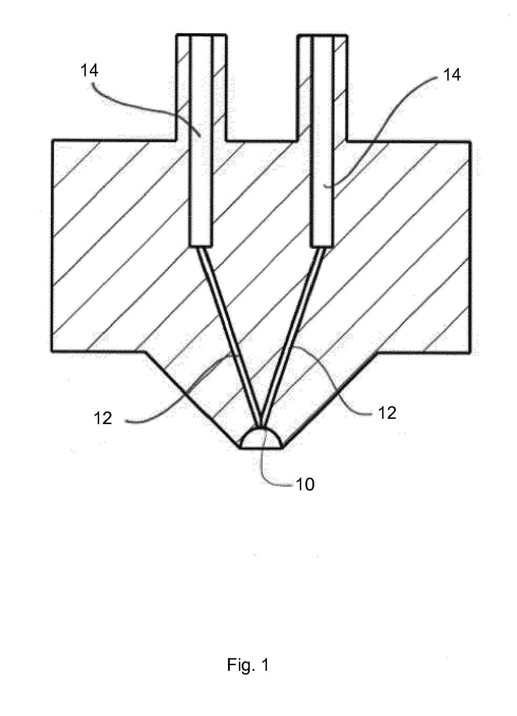

Fig. 1 shows two reservoirs 14 for storing different solutions in each of the reservoirs 14, the area 10 and one line 12 per reservoir 14 which line 12 connects the reservoir 14 with the area 10. Each reservoir 14 can be connected e. g. with a pump such as a syringe pump that can be controlled such that fluid is forced from the reservoir 14 via the line 12 into the area 10 and such that the flow of the solution can be stopped when a drop 17 has been formed at the area 10. In Fig. 1 the area 10 is formed as a recess. The recess if formed as a spherical cap. It has been found that such a form of the area 10 allows reliably the forming of a drop 17.

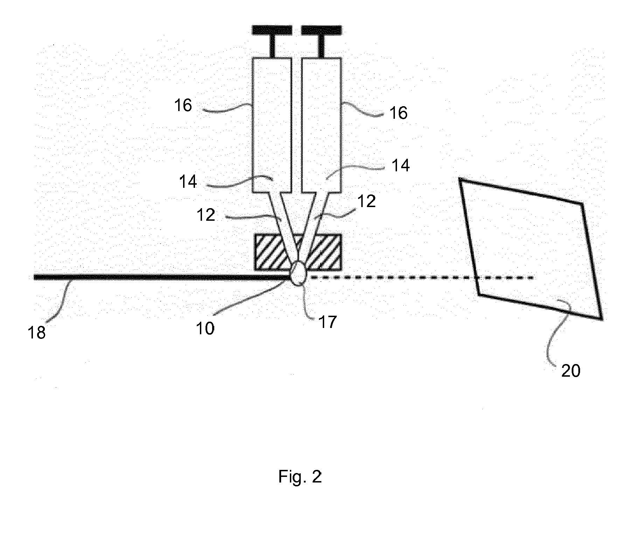

Fig. 2 shows a device comprising two syringes 16 having a reservoir 14 for containing different solutions in each of the syringes 16. Each of the syringes 16 is connected via lines 12 with the area 10. Each of the syringes 16 can be operated by use of a syringe pump which is not shown in Fig. 2. The syringe pumps can be operated such that fluid from each of the reservoirs 14 in the syringes 16 is forced via the lines 12 into the area 10, wherein the fluids are mixed and the drop 17 is formed. The drop 17 is then penetrated by radiation 18, e. g. X-radiation. The radiation 18 passes through the drop 17 by entering and leaving the drop 17 at a first and a second gas-liquid interface, respectively. The resulting scattered radiation 18 can be projected onto the screen 20. A pattern formed on the screen 20 can then be interpreted.

### List of Reference Numbers

- 10: area
- 12: line
- 14: reservoir
- 16: syringe
- 17: drop
- 18: radiation
- 20: screen

## Claims

1. Method for producing a liquid sample for analysis by use of radiation (18), wherein the sample is produced in stopped-flow technique, wherein at least two solutions are forced into an area (10), wherein the area (10) is orientated and shaped such that a drop (17) hanging at the area (10) can be formed from the at least two solutions, wherein flow of the solutions into the area (10) is stopped when the drop (17) has formed and is hanging at the area (10).

2. Method according to claim 1, wherein the area (10) is formed as a recess.

3. Method according to claim 2, wherein the recess is formed as a spherical cap.

4. Method according to any of the preceding claims, wherein each of the solutions is forced into the area (10) via a separate line (12) ending in the area (10) or wherein the solutions are brought together in a micro mixer and forced into the area (10) via a further line connecting the micro mixer with the area (10).

5. Method according to claim 4, wherein all of the lines (12) are ending in a single aperture in the area (10).

6. Method according to claim 4 or 5, wherein the area (10) is formed as a/the recess or a/the spherical cap, wherein the aperture is located or each of the lines (12) or the further line ends in the upper half, the upper third, the upper fourth, the upper fifth, or the upper sixth of the recess or spherical cap.

7. Method according to any of the preceding claims, wherein the surface of the area (10) comprises a material which is inert vis-à-vis the at least two solutions and/or a material which is hydrophilic if the at least two solutions are aqueous, lipophilic if the at least two solutions are oily, or amphiphilic.

8. Method according to claim 7, wherein the material comprises a polyether ether ketone polymer or a polytetrafluoroethylene.

9. Method according to any of the preceding claims, wherein the maximal total volume of the drop (17) is 200 µl, 180 µl, 160 µl, 140 µl, 120 µl, or 100 µl.

10. Method according to any of the preceding claims, wherein an atmosphere is created around the drop (17), wherein the atmosphere is saturated with at least a vapor of a solvent of one of the solutions.

11. Method according to any of the preceding claims, wherein the drop (17) is blown away by use of a gas stream after the analysis was performed and a new drop (17) is formed according to the method of any of the preceding claims for producing a further liquid sample for analysis by use of radiation (18).

12. Method according to claim 11, wherein the drop (17) is blown away and the new drop (17) is formed at a frequency of up to 10 Hz.

13. Method according to any of the preceding claims, wherein the sample is analyzed by use of radiation (18), wherein the radiation (18) passes through the drop (17) by entering and leaving the drop (17) at a first and a second gas-liquid interface, respectively.

14. Method according to claim 13, wherein the radiation (18) is X-radiation.

15. Device for performing the method according to any of the preceding claims comprising at least two reservoirs (14) for storing different solutions in each of the reservoirs (14), an area (10), one line (12) per reservoir (14) which line (12) connects the reservoir (14) with the area (10) or with a micro mixer connected with the area (10) via a further line such that the solution contained in this reservoir (14) can be forced into the area (10) via this line (12) or via this line (12), the micro mixer and the further line, a pump or valve per line (12) which pump or valve can be controlled such that a flow of the solution from said line (12) into the area (10) or the micro mixer can be generated and stopped when a drop (17) has formed at the area (10), wherein the area (10) is orientated and shaped such that a drop (17) hanging at the area (10) can be formed.
